# EUROPEAN PATENT APPLICATION

(11) **EP 4 641 052 A1**
(43) Date of publication of application: **29.10.2025**
(21) Application number: 23906832.3
(22) Date of filing: 12.12.2023
(51) Int. Cl.: F16J 15/48, F16J 15/18, F16J 15/3272

(54) **SEAL RING**

(30) Priority: 21.12.2022 JP 2022204181
(71) Applicant: Eagle Industry Co., Ltd., Minato-ku Tokyo 105-8587 (JP)
(72) Inventor: GOTO Kensaku, Tokyo 105-8587 (JP); OTA Takafumi, Tokyo 105-8587 (JP)
(74) Representative: WSL Patentanwälte Partnerschaft mbB
(86) International application number: PCT/JP2023/044477
(87) International publication number: WO 2024/135467

(57) **Abstract**

There is provided a seal ring capable of maintaining parallelism between sliding surfaces. A seal ring 3 includes a sliding surface 3a provided with a dynamic pressure generation groove 36 that rotates and slides relative to one of a shaft 1 and a housing 2, into which the shaft 1 is inserted, to generate a dynamic pressure; and an installation surface 3b intersecting the sliding surface 3a and installed on the housing 2. A recess 37 that is open toward a surface 2a which is formed in the housing 2 to face the installation surface 3b of the seal ring 3 is provided in the seal ring 3.

## Description

### {TECHNICAL FIELD}

The present invention relates to a seal ring, for example, a seal ring used for sealing a gap between a shaft and a housing, particularly to a seal ring that is mounted and used in an annular groove, namely, a so-called stuffing box.

### {BACKGROUND ART}

An example of a shaft sealing device that prevents leakage of a sealed fluid is a seal ring having an annular shape and disposed between a rotating shaft and a housing of a rotating device. In such a seal ring, in recent years, reducing the loss of energy caused by sliding has been desired for environmental measures and the like.

For example, a seal ring described in Patent Citation 1 is fixed to a housing, and is loosely fitted into an annular groove, which is provided in a rotating shaft, so as to be rotatable, and a side surface of the seal ring and a side surface of the annular groove are slidable relative to each other.

In addition, an oil groove communicating with an oil chamber side and a wedge effect generation groove extending from the oil groove in a circumferential direction are provided on the side surface of the seal ring. When the rotating shaft rotates, the oil groove takes in hydraulic oil from an oil chamber, dynamic pressure is generated by the wedge effect due to the wedge effect generation groove, and the side surface of the seal ring is lifted from the side surface of the annular groove to form an oil film. Accordingly, the frictional force between the side surface of the seal ring and the side surface of the annular groove can be reduced.

### {CITATION LIST}

### {Patent Literature}

Patent Citation 1: JP H9-210211 A (Page 4, FIG. 4)

### {SUMMARY OF INVENTION}

### {Technical Problem}

In the seal ring of Patent Citation 1, the seal ring is disposed to protrude from the annular groove of the rotating shaft toward a radial outer side, and dynamic pressure due to the wedge effect generation groove is not generated in a radial outer-side portion of the side surface of the seal ring. According to this configuration, since dynamic pressure is generated only in a radial inner-side portion of the side surface of the seal ring, twisting occurs in the seal ring such that the radial inner-side portion moves away from the side surface of the annular groove and the radial outer-side portion approaches the side surface side of the annular groove, and the dynamic pressure generation effect decreases, which is a risk.

The present invention has been made in view of such problems, and an object of the present invention is to provide a seal ring capable of maintaining parallelism between sliding surfaces.

### {Solution to Problem}

In order to solve the foregoing problems, a seal ring according to the present invention is a seal ring including: a sliding surface provided with a dynamic pressure generation groove that rotates and slides relative to one of a shaft and a housing, into which the shaft is inserted, to generate a dynamic pressure; and an installation surface intersecting the sliding surface and installed on remaining one of the shaft and the housing, wherein a recess that is open toward a surface which is formed in the remaining one of the shaft and the housing to face the installation surface of the seal ring is provided in the seal ring. According to the aforesaid feature of the present invention, since a portion of the seal ring between the sliding surface and the recess can be deformed toward a recess side due to stress generated when the dynamic pressure is generated, and the stress can be absorbed, parallelism between the sliding surfaces can be maintained.

It may be preferable that the recess is provided around an entire circumference of the seal ring. According to this preferable configuration, a portion of the seal ring between the sliding surface and the recess can be evenly deformed around the entire circumference.

It may be preferable that the sliding surface is separated from an installed surface on which is the seal ring is installed and which is included in the surface formed in the remaining one other of the shaft and the housing. According to this preferable configuration, since a portion of the seal ring between the sliding surface and the recess does not interfere with the installed surface of the other of the shaft and the housing, the portion is easily deformed toward the recess side.

It may be preferable that the recess extends to overlap with at least a counter-sliding surface of the one of the shaft and the housing in an axial view. According to this preferable configuration, since the recess extends to a position overlapping the sliding surface when viewed in an axial direction, a portion of the seal ring between the sliding surface and the recess can be reliably deformed toward the recess side.

It may be preferable that the dynamic pressure generation groove is disposed on a side opposite to the remaining one of the shaft and the housing with respect to a bottom surface of the recess. According to this preferable configuration, since no dynamic pressure generation groove is formed in a portion of the seal ring between the sliding surface and the recess, a change in the function of the dynamic pressure generation groove due to the deformation of the portion can be avoided.

It may be preferable that the sliding surface and a counter-sliding surface of the one of the shaft and the housing face each other in an axial direction and the recess is disposed on a sliding surface side with respect to an axial center of the seal ring. According to this preferable configuration, since a portion of the seal ring between the sliding surface and the recess can be formed to be thin, the portion is easily deformed.

It may be preferable that the sliding surface and a counter-sliding surface of the one of the shaft and the housing face each other in a radial direction and the recess is disposed close to a sliding surface side. According to this preferable configuration, since a portion of the seal ring between the sliding surface and the recess can be formed to be thin, the portion is easily deformed.

It may be preferable that a cross-sectional shape of the seal ring is line-symmetrical with respect to a radial line. According to this preferable configuration, when the seal ring is assembled, the assembly can be easily performed without paying attention to the orientation of the sliding surface.

### {BRIEF DESCRIPTION OF DRAWINGS}

FIG. 1 is a schematic cross-sectional view illustrating a shaft sealing device to which a seal ring according to a first embodiment of the present invention is applied.
FIG. 2A is a view of the seal ring when viewed in an axial direction in the first embodiment, FIG. 2B is an enlarged view of a cut portion when viewed in the axial direction, and FIG. 2C is a view in the direction of arrow A.
FIG. 3A is a view of dynamic pressure generation grooves when viewed in the axial direction in the first embodiment, and FIG. 3B is a cross-sectional view taken along line B-B.
FIG. 4 is a schematic view illustrating an end surface cut along a C-C cross section in FIG. 3.
FIG. 5 is a schematic cross-sectional view illustrating a state where dynamic pressure is generated by the dynamic pressure generation groove in the first embodiment.
FIG. 6 is a schematic cross-sectional view illustrating a shaft sealing device to which a seal ring according to a second embodiment of the present invention is applied.
FIG. 7 is a schematic cross-sectional view illustrating a shaft sealing device to which a seal ring according to a third embodiment of the present invention is applied.
FIG. 8 is a schematic cross-sectional view illustrating a shaft sealing device to which a seal ring according to a fourth embodiment of the present invention is applied.

### {DESCRIPTION OF EMBODIMENTS}

Modes for implementing a seal ring according to the present invention will be described below based on embodiments.

### {First embodiment}

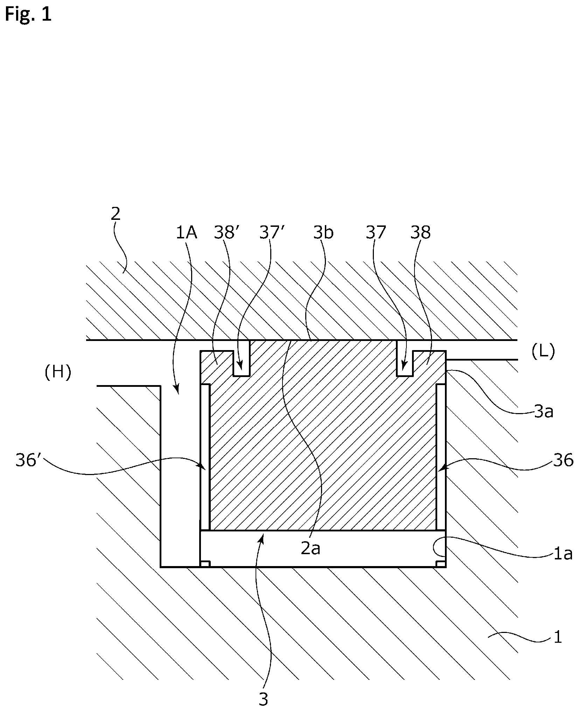

A seal ring according to a first embodiment of the present invention will be described with reference to FIGS. 1 to 5. Incidentally, in the present embodiment, the following description assumes that the right side of the paper sheet of FIG. 1 represents a right side of the seal ring and the left side of the paper sheet of FIG. 1 represents a left side of the seal ring. Incidentally, for convenience of description, dynamic pressure generation grooves 36 and 36', grooves 37 and 37', protrusions 38 and 38' and the like are illustrated larger than actual dimensions.

A shaft sealing device illustrated in FIG. 1 can be suitably used for an application for sealing an annular gap between a rotating shaft 1 and a housing 2 that rotate relative to each other, for example, in a rotating device in order to hold hydraulic pressure. In the present embodiment, a case where the present invention is applied to such an application will be described as an example. Incidentally, FIG. 1 illustrates a state where no dynamic pressure is generated in the dynamic pressure generation groove 36 of a seal ring 3.

The shaft sealing device is mainly composed of the rotating shaft 1 serving as a shaft; the housing 2; and the seal ring 3. The seal ring 3 is loosely fitted into an annular groove 1A having a rectangular cross section and provided in the rotating shaft 1.

As will be described later, a right surface 3a serving as a sliding surface of the seal ring 3 slides against a right surface 1a serving as a counter-sliding surface constituting the annular groove 1A, and an outer peripheral surface 3b serving as an installation surface of the seal ring 3 is brought into press contact with an inner peripheral surface 2a serving as an installed surface of the housing 2.

Incidentally, the right surface 3a of the seal ring 3 includes a portion that comes into contact with the right surface 1a of the annular groove 1A, and a portion disposed on a radial outer side with respect to the right surface 1a of the annular groove 1A (hereinafter, also referred to as a "flush portion"), and in the present embodiment, the sliding surface of the seal ring 3 refers to the entirety of the right surface 3a of the seal ring 3. Namely, the sliding surface of the seal ring 3 includes a portion that comes into contact with the right surface 1a of the annular groove 1A and a portion that is flush with the portion.

In the present embodiment, the fluid pressure in a left region of FIG. 1 is configured to change, and the seal ring 3 plays a role in holding the fluid pressure in a sealed region (H) on the left side of the figure. Incidentally, although not illustrated, when a device using the seal ring 3 is in a stopped state, the fluid pressure in the sealed region (H) is low and is the same as the pressure in a leakage region (L) on the right side of FIG. 1, and when the device is in an operation state, the fluid pressure in the sealed region (H) is higher than that in the leakage region (L).

The seal ring 3 is made of a resin material such as polyetheretherketone (PEEK), polyphenylene sulfide (PPS), or polytetrafluoroethylene (PTFE).

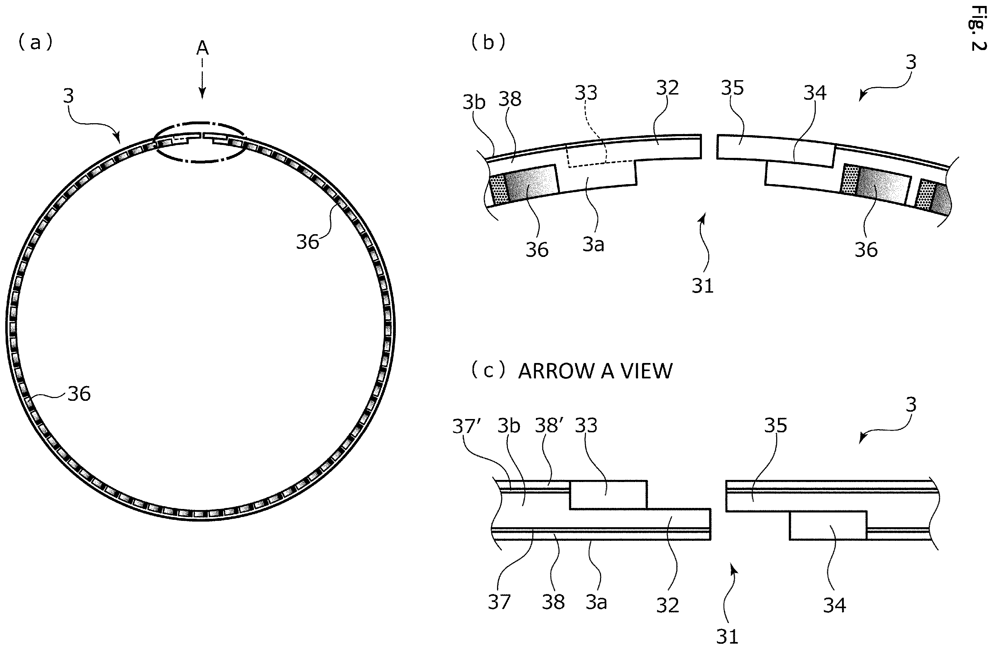

As illustrated in FIGS. 2A to 2C, a cut portion 31 is formed in the seal ring 3 at one location in a circumferential direction. Incidentally, FIG. 2B is an enlarged view of an enclosed portion in FIG. 2A.

The cut portion 31 is a known special step cut that is cut in a stepped shape when viewed from both axial sides (refer to FIGS. 2A and 2B) and the radial outer side (refer to FIG. 2C). Accordingly, in the seal ring 3, a first fitting protrusion 32 and a first fitting recess 33 are provided on an outer peripheral surface side of one side, and a second fitting recess 34 into which the first fitting protrusion 32 fits and a second fitting protrusion 35 that fits into the first fitting recess 33 are provided on the outer peripheral surface side of the other side.

Incidentally, the cut portion 31 may be formed not only by cutting through machining but also by molding. In addition, here, a special step cut has been provided as one example of the cut portion 31; however, the present invention is not limited thereto, and a known straight cut, bias cut, step cut, or the like can also be employed. Incidentally, when a low elastic material (for example, PTFE or the like) is employed as the material for the seal ring 3, the cut portion may not be provided.

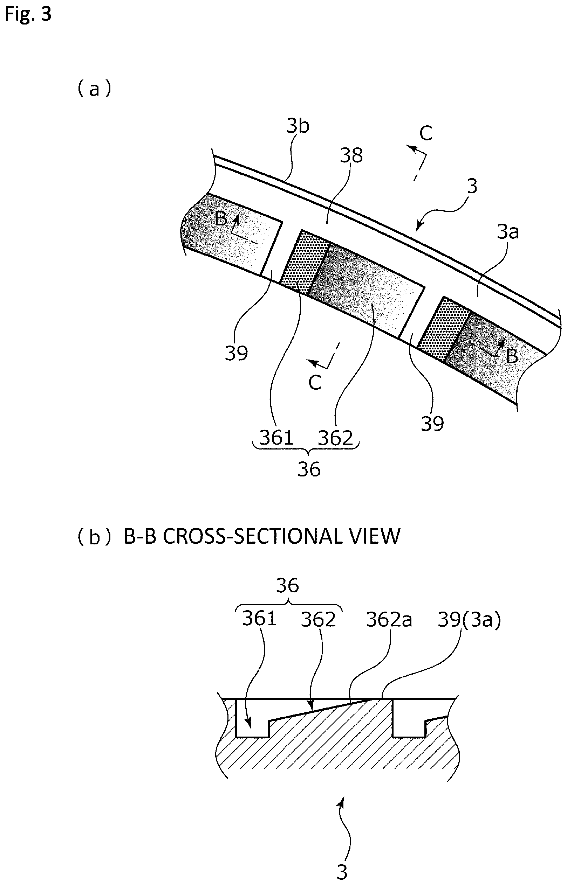

In addition, as illustrated in FIG. 2A and FIGS. 3A and 3B, a plurality of the dynamic pressure generation grooves 36 are formed on the right surface 3a of the seal ring 3 in the circumferential direction. Incidentally, the number of the dynamic pressure generation grooves 36 can be freely changed.

Particularly, as illustrated in FIG. 3A, the dynamic pressure generation groove 36 has a rectangular shape extending along the circumferential direction when viewed in an axial direction. The dynamic pressure generation groove 36 is open in the axial direction and a radially inward direction. In addition, the dynamic pressure generation grooves 36 adjacent to each other in the circumferential direction are partitioned off from each other by a land 39 constituting the right surface 3a of the seal ring 3.

In addition, the dynamic pressure generation groove 36 includes an introduction groove portion 361 and an inclined groove portion 362.

Particularly, as illustrated in FIG. 3B, the introduction groove portion 361 is disposed on an upstream side of the dynamic pressure generation groove 36 in a rotation direction (namely, on the left side of the paper sheet of FIG. 3B). The introduction groove portion 361 can store oil on a radial inner side of the seal ring 3.

The inclined groove portion 362 is configured to become gradually shallower as the inclined groove portion 362 extends from the introduction groove portion 361 toward a downstream side in the rotation direction (namely, toward the right side of the paper sheet of FIG. 3B). Specifically, a bottom surface 362a of the inclined groove portion 362 extends linearly from the vicinity of a bottom portion of the introduction groove portion 361 to the land 39.

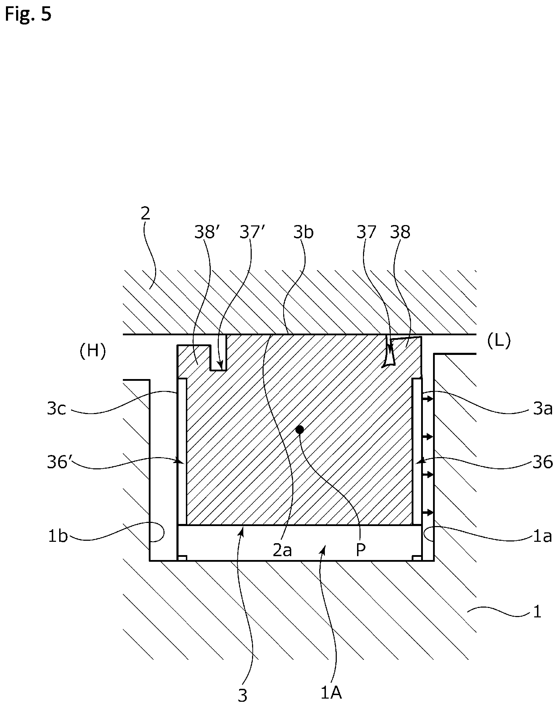

When the right surface 3a of the seal ring 3 and the right surface 1a of the rotating shaft 1 slide relative to each other, the oil in the introduction groove portion 361 is guided to the inclined groove portion 362, and dynamic pressure is generated due to the wedge effect of the inclined groove portion 362. Accordingly, the right surface 3a of the seal ring 3 and the right surface 1a of the rotating shaft 1 are slightly separated from each other (refer to FIG. 5), and an oil film is formed, so that the frictional force between the right surface 3a of the seal ring 3 and the right surface 1a of the annular groove 1A can be reduced.

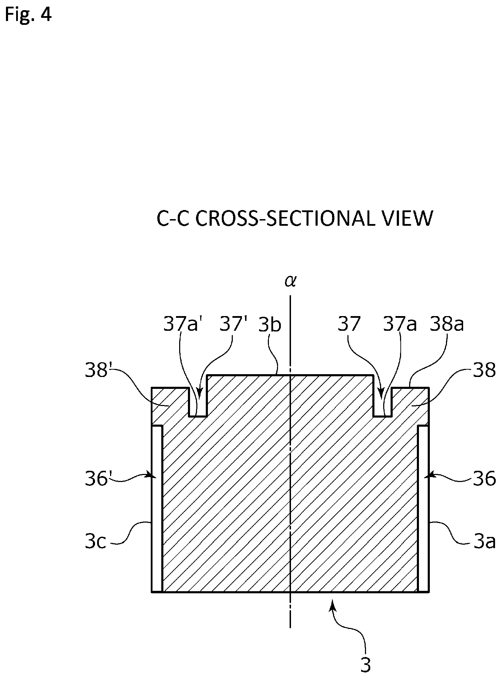

As illustrated in FIG. 4, the cross-sectional shape of a portion of the seal ring 3 except for the cut portion 31 is line-symmetrical with respect to a radial line α.

Specifically, the seal ring 3 is provided with the dynamic pressure generation grooves 36 and 36', the grooves 37 and 37' serving as recesses, and the protrusions 38 and 38'.

The dynamic pressure generation groove 36' has a symmetrical shape to the dynamic pressure generation groove 36 described above.

The groove 37 is provided at a position on the left side away from the right surface 3a of the seal ring 3. Namely, the groove 37 is provided in a back portion of the right surface 3a. In other words, the groove 37 is provided at a position overlapping the right surface 3a in the axial direction. The groove 37 has a rectangular cross section that is open to the radial outer side, and is provided around the entire circumference of the seal ring 3. In addition, the groove 37 is open at both circumferential ends.

In addition, the groove 37 extends further from a radial outer end of the right surface 1a of the annular groove 1A to the radial inner side. In other words, the groove 37 overlaps the right surface 1a of the annular groove 1A in the axial direction (refer to FIG. 1).

The groove 37' is provided on the outer peripheral surface 3b of the seal ring 3 at a position on the right side away from a left surface 3c of the seal ring 3. The groove 37' has a symmetrical shape to the groove 37.

The protrusion 38 is a portion that protrudes further from a bottom surface 37a of the groove 37 toward the radial outer side. In other words, the protrusion 38 is a portion that remains between the groove 37 and the right surface 3a of the seal ring 3, and can also be referred to as a corner portion. Incidentally, a right surface of the protrusion 38 forms a part of the right surface 3a of the seal ring 3.

An outer peripheral surface 38a of the protrusion 38 is disposed on the radial inner side with respect to the outer peripheral surface 3b of the seal ring 3. In other words, the protrusion 38 is separated from the inner peripheral surface 2a of the housing 2 in a radial direction.

The protrusion 38' is a portion that remains between the groove 37' and the left surface 3c of the seal ring 3, and can also be referred to as a corner portion. The protrusion 38' has a symmetrical shape to the protrusion 38.

The dynamic pressure generation grooves 36 and 36' are disposed on the radial inner side with respect to the bottom surfaces 37a and 37a' of the grooves 37 and 37'. In other words, the dynamic pressure generation grooves 36 and 36' do not overlap the grooves 37 and 37' in the axial direction. Namely, the protrusions 38 and 38' are not provided with the dynamic pressure generation grooves 36 and 36'.

Next, the state of the seal ring when the rotating shaft 1 rotates will be described with reference to FIG. 5.

As illustrated in FIG. 1, when the device is actuated, the fluid pressure in the sealed region (H) becomes higher than that in the leakage region (L), and the seal ring 3 is subjected to a force in a radial expansion direction due to the fluid pressure in the sealed region (H), so that the outer peripheral surface 3b of the seal ring 3 is brought into press contact with the inner peripheral surface 2a of the housing 2. Namely, the seal ring 3 is fixed to the housing 2.

In addition, the right surface 3a of the seal ring 3 comes into press contact with and slides against the right surface 1a of the annular groove 1A of the rotating shaft 1 due to the fluid pressure in the sealed region (H).

As illustrated in FIG. 5, when the right surface 3a of the seal ring 3 and the right surface 1a of the rotating shaft 1 slide relative to each other, dynamic pressure is generated by the dynamic pressure generation groove 36, and the right surface 3a of the seal ring 3 and the right surface 1a of the annular groove 1A are slightly separated from each other. Incidentally, in FIG. 5, for convenience of description, the separation width between the right surface 3a of the seal ring 3 and the right surface 1a of the annular groove 1A is illustrated larger than an actual width.

At this time, since no dynamic pressure generation groove 36 is provided on the radial outer side of the right surface 3a of the seal ring 3, a larger dynamic pressure acts on the radial inner side of the right surface 3a of the seal ring 3 than on the radial outer side. Namely, a twisting force acts on the seal ring 3 such that the radial inner side of the right surface 3a of the seal ring 3 moves away from the right surface 1a of the annular groove 1A more greatly than the radial outer side.

In detail, a force acts on the seal ring 3 to incline the right surface 3a of the seal ring 3 with respect to the right surface 1a of the annular groove 1A such that a radial inner-side portion of the cross section of the seal ring 3 with respect to a center point P moves away from the right surface 1a of the annular groove 1A and a radial outer-side portion with respect to the center point P approaches the right surface 1a of the annular groove 1A.

Since the seal ring 3 of the first embodiment is provided with the groove 37, the protrusion 38 is deformed toward a groove 37 side due to stress generated when dynamic pressure is generated between the right surface 3a of the seal ring 3 and the right surface 1a of the annular groove 1A, so that the stress can be absorbed. According to this configuration, since the seal ring 3 is hardly deformed in a twisting direction and the right surface 3a of the seal ring 3 is hardly inclined with respect to the right surface 1a of the annular groove 1A, the parallelism between the right surface 3a of the seal ring 3 and the right surface 1a of the annular groove 1A can be maintained. Therefore, contact between the right surface 3a of the seal ring 3 and the right surface 1a of the annular groove 1A can be avoided, and the dynamic pressure effect provided by the dynamic pressure generation groove 36 can be prevented from decreasing.

In addition, even when the right-and-left width of the groove 37 is small, the protrusion 38 can be greatly deformed toward the groove 37 side, so that a large right-and-left width can be ensured for the outer peripheral surface 3b of the seal ring 3, and the seal ring 3 can be stably installed in the housing 2. In other words, the rotation of the seal ring 3 together with the rotating shaft 1 can be avoided.

In addition, since the groove 37 is provided around the entire circumference of the seal ring 3, the protrusion 38 can be evenly deformed in the circumferential direction. Incidentally, even when the groove 37 is divided by the cut portion 31 as in the present embodiment, the groove 37 is an annular groove provided around the entire circumference.

In addition, since the outer peripheral surface 38a of the protrusion 38 is disposed on the radial inner side with respect to the outer peripheral surface 3b of the seal ring 3, when the protrusion 38 is deformed toward the groove 37 side, the outer peripheral surface 38a of the protrusion 38 does not interfere with the inner peripheral surface 2a of the housing 2. Therefore, the protrusion 38 is deformed easily and smoothly.

In addition, since the groove 37 extends further from the radial outer end of the right surface 1a of the annular groove 1A to the radial inner side, the protrusion 38 can be reliably deformed toward the groove 37 side. In addition, the deformation of the protrusion 38 can reliably contribute to maintaining the parallelism between the right surface 3a of the seal ring 3 and the right surface 1a of the annular groove 1A.

In addition, the dynamic pressure generation groove 36 is disposed on the radial inner side with respect to the bottom surface 37a of the groove 37. According to this configuration, since the protrusion 38 is not provided with the dynamic pressure generation groove 36, even when the protrusion 38 is deformed, the protrusion 38 does not affect the dynamic pressure generation effect provided by the dynamic pressure generation groove 36.

In addition, the groove 37 is disposed on a right surface 3a side with respect to an axial center of the seal ring 3. According to this configuration, since the thickness of the protrusion 38 in the axial direction can be formed to be thin, the protrusion 38 is easily deformed even by a small dynamic pressure.

In addition, since the cross-sectional shape of the seal ring 3 is line-symmetrical with respect to the radial line α, when the seal ring 3 is assembled, the seal ring 3 can be easily assembled without paying attention to the axial orientation of the seal ring 3.

In addition, for example, when the seal ring 3 is used in a shaft sealing device in which the pressure balance is reversed between the regions on both sides of the seal ring 3, one of the protrusions 38 and 38' can be deformed while dynamic pressure is generated in one of the dynamic pressure generation grooves 36 and 36'. Specifically, taking a case where the pressure balance between the regions on both sides is reversed from the state illustrated in FIG. 1, as an example, the seal ring 3 moves to the left side, and the left surface 3c of the seal ring 3 comes into contact with and slides against a left surface 1b of the annular groove 1A, so that the protrusion 38' can be deformed while dynamic pressure is generated in the dynamic pressure generation groove 36'.

### {Second embodiment}

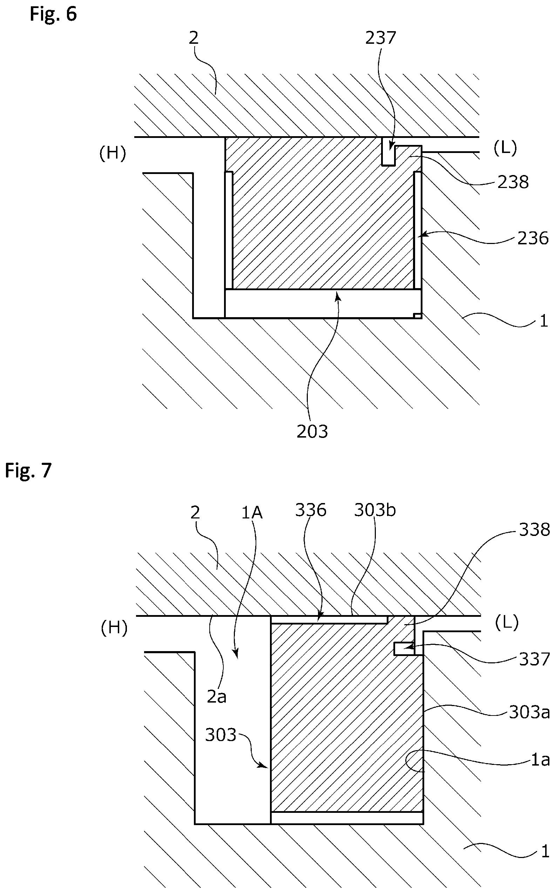

Next, a seal ring according to a second embodiment of the present invention will be described with reference to FIG. 6. Incidentally, the description of configurations that are the same as and overlap with the configurations of the first embodiment will be omitted.

As illustrated in FIG. 6, the dynamic pressure generation groove 36', the groove 37', and the protrusion 38' on the left side are not provided in a seal ring 203 of the second embodiment. In other words, a dynamic pressure generation groove 236, a groove 237, and a protrusion 238 are provided only on the right side of the seal ring 203 of the second embodiment.

### {Third embodiment}

Next, a seal ring according to a third embodiment of the present invention will be described with reference to FIG. 7. Incidentally, the description of configurations that are the same as and overlap with the configurations of the second embodiment will be omitted.

As illustrated in FIG. 7, a seal ring 303 of the third embodiment is configured such that a right surface 303a serving as an installation surface comes into press contact with the right surface 1a of the annular groove 1A of the rotating shaft 1 due to fluid pressure and the seal ring 303 rotates together with the rotating shaft 1.

In the seal ring 303, a dynamic pressure generation groove 336 is formed on an outer peripheral surface 303b serving as a sliding surface. In addition, a groove 337 is provided at a position on the radial inner side away from the outer peripheral surface 303b of the seal ring 303. The groove 337 has a rectangular cross section that is open to the right side, and is provided around the entire circumference of the seal ring 303. Incidentally, the groove 337 is disposed close to the radial outer side, namely, an outer peripheral surface 303b side in the cross section of the seal ring 303.

In addition, a protrusion 338 that remains between the groove 337 and the outer peripheral surface 303b is separated from the right surface 1a of the annular groove 1A toward the left side.

When the seal ring 303 rotates together with the rotating shaft 1, the outer peripheral surface 303b of the seal ring 303 and the inner peripheral surface 2a of the housing 2 slide against each other, dynamic pressure is generated in the dynamic pressure generation groove 336, and the outer peripheral surface 303b of the seal ring 303 and the inner peripheral surface 2a of the housing 2 are separated from each other to form an oil film.

At this time, the protrusion 338 is deformed toward the radial inner side by the dynamic pressure generated in the dynamic pressure generation groove 336, so that the inclination between the outer peripheral surface 303b of the seal ring 303 and the inner peripheral surface 2a of the housing 2 can be suppressed.

In addition, since the groove 337 is disposed close to the outer peripheral surface 303b side, and the thickness of the protrusion 338 in the radial direction can be formed to be thin, the protrusion 338 is easily deformed even by a small dynamic pressure.

### {Fourth embodiment}

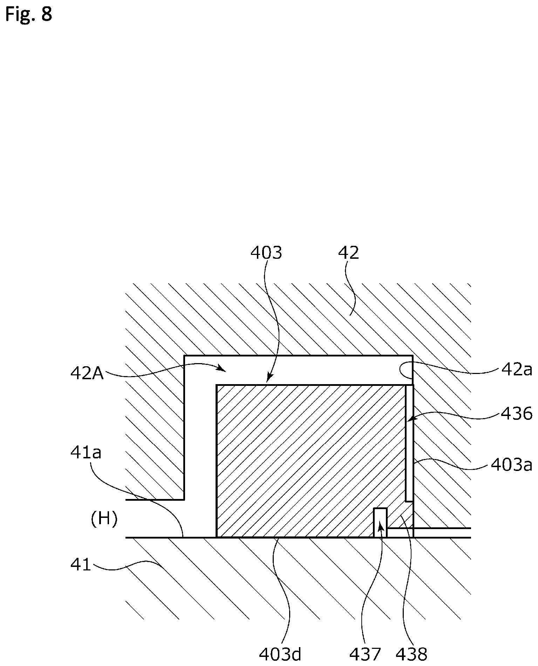

Next, a seal ring according to a fourth embodiment of the present invention will be described with reference to FIG. 8. Incidentally, the description of configurations that are the same as and overlap with the configurations of the third embodiment will be omitted.

As illustrated in FIG. 8, in a shaft sealing device of the fourth embodiment, an annular groove 42A is formed in a housing 42, and a seal ring 403 is disposed in the annular groove 42A. Incidentally, an outer peripheral surface 41a of a rotating shaft 41 extends flat in the axial direction.

An inner peripheral surface 403d serving as an installation surface of the seal ring 403 comes into press contact with the outer peripheral surface 41a of the rotating shaft 41 due to fluid pressure, and rotates together with the rotating shaft 41.

In addition, a right surface 403a serving as a sliding surface of the seal ring 403 comes into contact with a right surface 42a of the annular groove 42A due to fluid pressure, and is slidable relative to the right surface 42a.

A dynamic pressure generation groove 436 is formed on the right surface 403a of the seal ring 403. In addition, a groove 437 is provided at a position on the left side away from the right surface 403a of the seal ring 403. The groove 437 has a rectangular cross section that is open to the radial inner side, and is provided around the entire circumference of the seal ring 403.

In addition, a protrusion 438 that remains between the groove 437 and the right surface 403a is separated from the outer peripheral surface 41a of the rotating shaft 41 toward the radial outer side.

When the seal ring 403 rotates together with the rotating shaft 41, the right surface 403a of the seal ring 403 and the right surface 42a of the annular groove 42A slide against each other, dynamic pressure is generated in the dynamic pressure generation groove 436, and the right surface 403a of the seal ring 403 and the right surface 42a of the annular groove 42A are separated from each other to form an oil film.

At this time, the protrusion 438 is deformed toward a groove 437 side by the dynamic pressure generated in the dynamic pressure generation groove 436, so that the inclination between the right surface 403a of the seal ring 403 and the right surface 42a of the annular groove 42A can be suppressed.

The embodiments of the present invention have been described above with reference to the drawings; however, specific configurations are not limited to these embodiments, and modifications or additions that are made without departing from the scope of the present invention are also included in the present invention.

For example, in the first to fourth embodiments, a mode in which the sliding surface and the installation surface of the seal ring are perpendicular to each other has been provided as an example; however, the sliding surface and the installation surface are not limited to being perpendicular to each other as long as the sliding surface and the installation surface extend in directions intersecting each other.

In addition, in the first to fourth embodiments, a mode in which the dynamic pressure generation groove is a rectangular groove that is open to a sealed region side and the mating sliding surface has been provided as an example; however, the shape of the dynamic pressure generation groove can be freely changed, such as a dimple that is open only to the mating sliding surface, or a spiral groove extending with a circumferential and radial components. In addition, the number of the dynamic pressure generation grooves can also be freely changed.

In addition, in the first to fourth embodiments, a mode in which the recess extends around the entire circumference of the seal ring has been provided as an example; however, for example, a plurality of the recesses are provided independently in the circumferential direction.

In addition, a circumferential end portion of the recess may not be open to the cut portion 31.

In addition, in the first to fourth embodiments, a mode in which the recess has a rectangular cross section has been provided as an example; however, the recess may have a U-shaped cross section, a V-shaped cross section, or the like.

In addition, in the first to fourth embodiments, a mode in which the protrusion is separated from the installed surface of the shaft or the housing has been provided as an example; however, the protrusion may be in contact with the installed surface.

In addition, in the first to fourth embodiments, a mode in which the protrusion is not provided with the dynamic pressure generation groove has been provided as an example; however, for example, the protrusion may be provided with a part of the dynamic pressure generation groove.

In addition, as long as the protrusion is deformable, the thickness or width of the protrusion may be freely changed.

In the first to fourth embodiments, a mode in which the shaft rotates with respect to the housing has been provided as an example; however, the housing may rotate with respect to the shaft, or the shaft and the housing rotate together in a relative rotation direction.

### {REFERENCE SIGNS LIST}

1 Rotating shaft (shaft)
1A Annular groove
1a Right surface (counter-sliding surface)
2 Housing
2a Inner peripheral surface (installed surface)
3 Seal ring
3a Right surface (sliding surface)
3b Outer peripheral surface (installation surface)
36, 36' Dynamic pressure generation groove
37, 37' Groove (recess)
38, 38' Protrusion
α Radial line

## Claims

1. A seal ring, comprising:
a sliding surface provided with a dynamic pressure generation groove that rotates and slides relative to one of a shaft and a housing, into which the shaft is inserted, to generate a dynamic pressure; and
an installation surface intersecting the sliding surface and installed on remaining one of the shaft and the housing,
wherein a recess that is open toward a surface which is formed in the remaining one of the shaft and the housing to face the installation surface of the seal ring is provided in the seal ring.

2. The seal ring according to claim 1,
wherein the recess is provided around an entire circumference of the seal ring.

3. The seal ring according to claim 1,
wherein the sliding surface is separated from an installed surface on which is the seal ring is installed and which is included in the surface formed in the remaining one of the shaft and the housing.

4. The seal ring according to any one of claims 1 to 3,
wherein the recess extends to overlap with at least a counter-sliding surface of the one of the shaft and the housing in an axial view.

5. The seal ring according to claim 1,
wherein the dynamic pressure generation groove is disposed on a side opposite to the remaining one of the shaft and the housing with respect to a bottom surface of the recess.

6. The sealing ring according to claim 1,
wherein the sliding surface and a counter-sliding surface of the one of the shaft and the housing face each other in an axial direction, and
the recess is disposed on a sliding surface side with respect to an axial center of the seal ring.

7. The seal ring according to claim 1,
wherein the sliding surface and a counter-sliding surface of the one of the shaft and the housing face each other in a radial direction, and
the recess is disposed close to a sliding surface side.

8. The seal ring according to claim 1,
wherein a cross-sectional shape of the seal ring is line-symmetrical with respect to a radial line.
